Europäisches Patentamt

European Patent Office

Office européen des brevets

(11) Numéro de publication : **0 520 910 A1**

# (12) DEMANDE DE BREVET EUROPEEN

(21) Numéro de dépôt : **92401822.9**

(22) Date de dépôt : **26.06.92**

(51) Int. Cl.$^5$ : **B66C 1/02**

(30) Priorité : **26.06.91 FR 9107865**

(43) Date de publication de la demande :
**30.12.92 Bulletin 92/53**

(84) Etats contractants désignés :
**BE DE FR GB IT SE**

(71) Demandeur : **SOCIETE D'APPLICATION DE
PROCEDES ELECTRONIQUES ET
MECANIQUES
Zone Industrielle Angers/Beaucouzé
F-49070 Beaucouzé (FR)**

(72) Inventeur : **Guichard, Patrick
69 Rue de Salpinte
FR-49000 Angers (FR)**

(74) Mandataire : **Keib, Gérard et al
Bouju Derambure (Bugnion) S.A. 38, avenue
de la Grande Armée
F-75017 Paris (FR)**

(54) **Ventouse pour appareil de préhension d'objets par dépression.**

(57)    La ventouse en matière souple pour appareil de préhension d'objets par dépression, comprend un embout axial tubulaire (3).

Dans l'embout tubulaire (3) est engagé de façon amovible l'extrémité tubulaire (4) d'un raccord (5) en matière rigide, cette extrémité tubulaire (4) étant limitée par un épaulement annulaire (6) venant en appui contre le bord (3a) de l'embout tubulaire (3), cet épaulement (6) étant adjacent à une partie annulaire filetée (7) vissée dans un taraudage (8) ménagé sur la surface interne d'une bague (9) entourant l'embout tubulaire (3) de la ventouse et en prise avec cet embout (3).

Utilisation pour améliorer la fixation des ventouses à un appareil de préhension d'objets par dépression.

FIG. 1B

EP 0 520 910 A1

La présente invention concerne une ventouse en matière souple pour appareil de préhension d'objets par dépression.

Un tel appareil de préhension à ventouses a été décrit par exemple dans le brevet européen 0336799 de la demanderesse.

Les ventouses de l'appareil de préhension comprennent une cavité évasée destinée à venir s'appliquer sur la surface de l'objet à soulever et à déplacer, et à l'opposé de cette cavité un embout axial destiné à être raccordé au dispositif d'aspiration de l'appareil.

Cet embout est moulé d'une seule pièce avec le reste de la ventouse, dans une matière souple telle que du caoutchouc.

Dans les réalisations connues, l'embout de la ventouse est engagé sur un tube relié à la source de dépression, la liaison avec ce dernier étant réalisée généralement par engagement à force ou par un collier qui comprime radialement l'embout sur le tube.

Compte tenu des charges relativement lourdes que doivent soulever les ventouses, la liaison entre l'embout et le tube doit être étudiée très soigneusement pour éviter tout risque de chute des charges.

Par ailleurs, la liaison entre l'embout de la ventouse et le tube doit être conçue de telle sorte que la ventouse puisse être facilement enlevée pour la remplacer soit par une ventouse neuve ou par une ventouse différente de la précédente et adaptée au levage d'objets différents.

La demanderesse a constaté selon son expérience, que le mode de fixation des ventouses précitées n'était pas satisfaisant.

Le but principal de la présente invention est par conséquent de créer une ventouse qui puisse être raccordée au dispositif d'aspiration de l'appareil d'une manière particulièrement fiable, tout en assurant une parfaite étanchéité et permettant un montage et démontage faciles de la ventouse.

L'invention vise ainsi une ventouse en matière souple pour appareil de préhension d'objets par dépression, comprenant une cavité et à l'opposé de cette cavité un embout axial tubulaire moulé d'une seule pièce avec le reste de la ventouse et destiné à être raccordé au dispositif d'aspiration de l'appareil.

Suivant l'invention, cette ventouse est caractérisée en ce que dans cet embout tubulaire est engagé de façon amovible l'extrémité tubulaire d'un raccord en matière rigide, cette extrémité tubulaire étant limitée par un épaulement annulaire venant en appui contre le bord de l'embout tubulaire, cet épaulement étant adjacent à une partie annulaire filetée vissée dans un taraudage ménagé sur la surface interne d'une bague entourant l'embout tubulaire de la ventouse et en prise avec cet embout, de telle sorte que ledit embout soit retenu axialement par la bague et comprimé radialement entre celle-ci et l'extrémité tubulaire dudit raccord rigide.

L'embout de la ventouse est retenu axialement au raccord d'une part par des moyens tels que des nervures engagées dans des gorges de la bague et d'autre part par le fait que le raccord est vissé à la bague.

Par ailleurs, les nervures de l'embout ne risquent pas de s'échapper des gorges de la bague, puisque l'embout est comprimé radialement entre la bague et l'extrémité tubulaire du raccord.

De plus, cette compression radiale assure une excellente étanchéité entre le raccord et l'embout.

D'autre part, le montage et le démontage de la ventouse sont extrêmement aisées du fait que ceux-ci n'impliquent qu'une simple opération de vissage ou de dévissage.

Selon une version préférée de l'invention, l'extrémité tubulaire du raccord engagée dans l'embout de la ventouse présente une surface tronconique dont la section décroît vers l'intérieur de la ventouse.

Ainsi, lors du vissage du raccord dans la bague, l'extrémité tronconique du raccord s'enfonce progressivement dans l'embout en assurant une compression radiale de l'embout entre cette extrémité et la bague, ce qui permet de renforcer l'étanchéité et la liaison entre l'embout et le raccord.

Selon une autre version préférée de l'invention, la ventouse comporte une patin rigide emboîté de façon amovible dans la cavité interne de la ventouse et présentant à l'opposé de l'embout une surface d'appui plane sur laquelle débouchent des canaux d'aspiration.

Un tel patin à surface plane permet d'utiliser la ventouse pour lever des objets fragiles tels que des objets sous forme de plaques minces, sans risquer de déformer ou détériorer ceux-ci.

D'autres particularités et avantages de l'invention apparaîtront encore dans la description ci-après.

Aux dessins annexés donnés à titre d'exemples non limitatifs :
- la figure 1A est une demi-vue en élévation de la ventouse,
- la figure 1B est une demi-vue en coupe axiale de la ventouse,
- la figure 1C est une coupe à échelle agrandie d'un détail de réalisation,
- la figure 2 est une vue en plan de dessus de la ventouse,
- la figure 3 est une vue en coupe axiale du raccord de la ventouse,
- la figure 4 est une vue en plan du dessus du raccord,
- la figure 5A est une demi-vue en élévation de la ventouse seule (sans bague ni raccord),
- la figure 5B est une demi-vue en coupe axiale de la ventouse seule,
- la figure 6 est une vue en plan d'un collier utilisable pour assurer la liaison directe (sans raccord) entre la ventouse et le tube,
- la figure 7 est une vue en élévation et en demi-coupe axiale d'un patin destiné à être emboîté dans une ventouse conforme à l'invention,
- la figure 8 est une vue de dessus dudit patin,
- la figure 9 est une vue de dessous dudit patin,
- la figure 10 est une vue en élévation et en demi-coupe axiale d'une variante de réalisation du raccord,
- les figures 11 et 12 sont des vues analogues à la figure 10, concernant d'autres variantes du raccord,
- les figures 13A et 13B sont respectivement une demi-vue en coupe axiale et une demi-vue en plan d'une version améliorée de la ventouse.

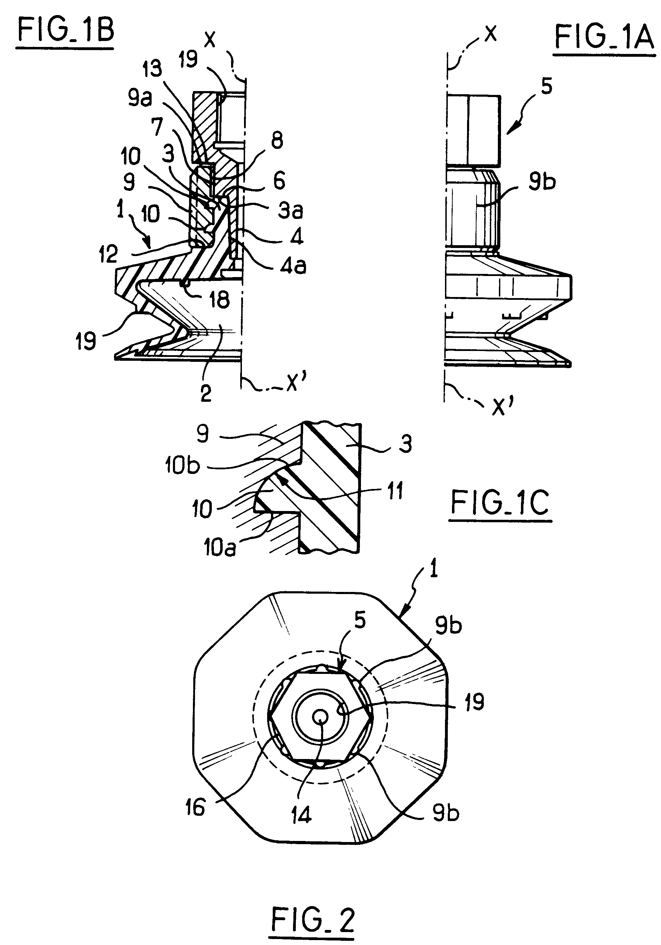

Dans la réalisation des figures 1A, 1B et 2, la ventouse en matière souple 1 en forme de demi-soufflet pour appareil de préhension d'objets par dépression, comprend une cavité 2 et à l'opposé de cette cavité 2 un embout axial tubulaire 3 moulé d'une seule pièce avec le reste de la ventouse et destiné à être raccordé au dispositif d'aspiration et de levage de l'appareil. Ce dispositif peut être du genre de celui décrit dans le brevet européen 0336799 de la demanderesse. Dans l'embout tubulaire 3 est engagé de façon amovible l'extrémité tubulaire 4 d'un raccord 5 en matière rigide, de préférence en métal, ou en matière plastique rigide.

Cette extrémité tubulaire 4 est limitée par un épaulement annulaire 6 venant en appui contre le bord 3a de l'embout tubulaire 3. Cet épaulement 6 est adjacent à une partie annulaire filetée 7 du raccord, vissée dans un taraudage 8 ménagé sur la surface interne d'une bague 9 entourant l'embout tubulaire 3 de la ventouse. Cette bague 9 est également en prise avec cet embout 3, de telle sorte que ledit embout 3 soit retenu axialement par la bague 9 et comprimé radialement entre celle-ci et l'extrémité tubulaire 4 du raccord rigide 5.

La figure là montre d'autre part que l'extrémité tubulaire 4 du raccord 5 engagée dans l'embout 3 de la ventouse présente une surface tronconique 4a dont la section décroît vers l'intérieur de la ventouse. La surface interne de l'embout présente au repos une surface tronconique légèrement rétrécie par rapport à celle de l'extrémité 4 de l'embout 3.

Par ailleurs, l'embout 3 de la ventouse 1 présente (voir également figure 1C) sur sa surface extérieure deux nervures annulaires 10 engagées dans deux gorges complémentaires 11 ménagées dans la surface intérieure de la bague 9.

La section desdites nervures 10 et gorges 11 présente une partie rectiligne 10a perpendiculaire à l'axe X-X' de la ventouse et une partie arquée 10b, la partie rectiligne 10a étant située du côté de la ventouse proprement dite.

On voit également sur la figure là, que l'embout 3 de la ventouse 1 présente à sa base un épaulement annulaire 12 sur lequel s'appuie la bague 9.

En outre, la surface filetée 7 du raccord 5 est limitée à l'opposé de sa partie tubulaire 4 engagée dans l'embout 3 par un épaulement annulaire 13 en regard du bord adjacent 9a de la bague 9. Cet épaulement 13 est adjacent à une surface 16 conformée par exemple en six pans pour servir de prise à un outil de vissage.

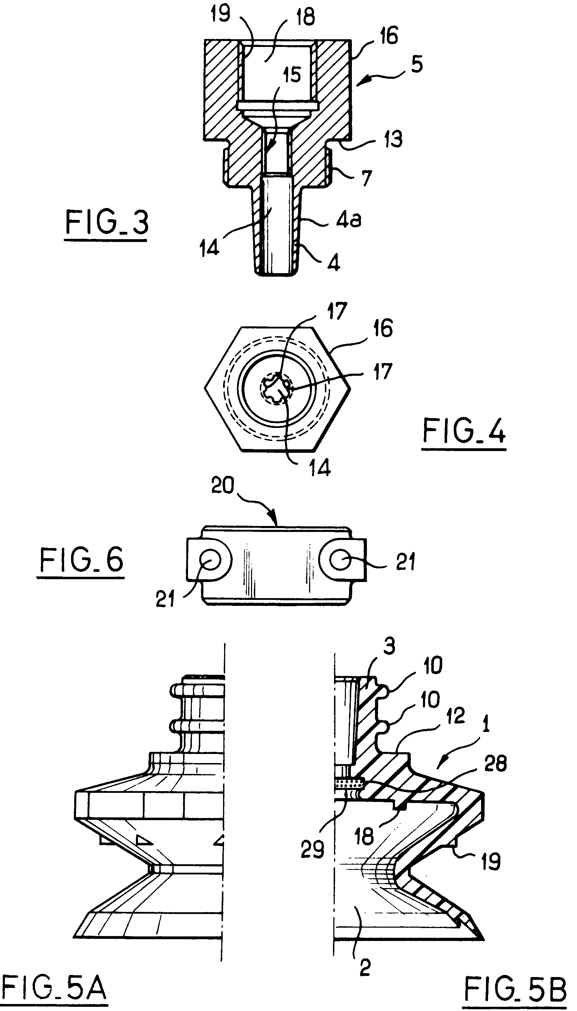

De plus, comme indiqué sur les figures 3 et 4, le raccord comporte sur sa surface interne, c'est-à-dire sur le canal de communication 14, une partie 15 conformée pour venir en prise avec un outil de vissage engagé axialement à l'intérieur du raccord.

Dans l'exemple représenté, cette partie conformée 15 présente des cannelures 17 (voir figure 4) située sur les génératrices d'un cylindre et destinées à venir en prise avec l'extrémité de forme complémentaire d'un outil. Ces cannelures 17 peuvent être remplacées par un profil à six pans ou autre.

La ventouse selon l'invention présente également la particularité de présenter des saillies 18, 19 destinée à éviter le collage des lèvres du demi-soufflet.

Une autre particularité réside dans le fait que la ventouse 1 a une forme octogonale (voir figure 2).

Pour améliorer la prise de la bague 9, sa surface extérieure comporte des cannelures 9b.

Dans l'exemple représenté sur les figures 1A et 3, le raccord 5 comporte un évidement interne 18 communiquant avec le canal 14, présentant un taraudage 19 permettant son raccordement par vissage avec l'extrémité filetée d'un tube.

Pour fixer le raccord 5 à la ventouse 1, on procède comme suit :

On commence par fixer la bague 9 à l'embout 3 de la ventouse 1. A cet effet, il suffit d'engager l'embout 3 dans la bague 9 jusqu'à ce que les nervures 10 s'emboîtent dans les gorges 11 de la bague 9.

Il suffit ensuite d'engager l'extrémité tronconique 4 du raccord 5 dans l'embout 3 de la ventouse et de visser le raccord 5 dans la bague 9. Ce vissage a pour effet d'enfoncer l'extrémité tronconique 4 du raccord dans l'embout 3 qui se trouve donc comprimé radialement entre cette extrémité 4 et la bague 9.

Cette compression radiale et le vissage du raccord 5 dans la bague 9 permettent d'obtenir une fixation très sûre de la ventouse 1 au raccord 5 tout en garantissant une parfaite étanchéité.

Pour démonter la ventouse 1 il suffit de dévisser la bague 9 du raccord 5 puis de déboîter l'embout 3 de la bague 9.

Le dévissage du raccord 5 par rapport à la bague 9 peut également être exécuté en engageant dans le canal axial 14 du raccord 5 un outil approprié venant en prise avec les cannelures 17.

La ventouse 1 seule telle que représentée sur les figures 5A et 5B peut également être fixée à un tube, sans le raccord 5. A cet effet, on enfile l'embout 3 sur le tube, puis on serre l'embout 3 sur ce tube au moyen du collier 20 représenté sur la figure 6 qui comporte deux vis 21 diamétralement opposées venant se loger entre les deux nervures 10 de l'embout 3.

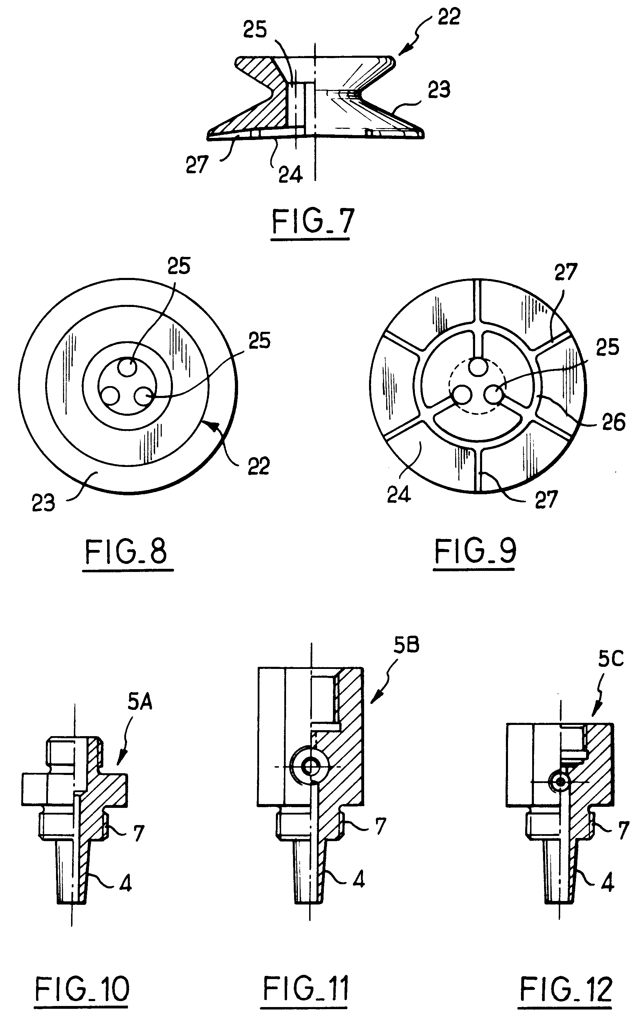

Dans la réalisation des figures 7, 8 et 9, on a représenté un patin rigide 22 dont la surface extérieure 23 correspond à la surface intérieure de la cavité interne 2 de la ventouse. Ce patin 22 peut être emboîté de façon amovible dans la cavité 2 de la ventouse et présente à l'opposé de l'embout de cette ventouse une surface d'appui plane 24 sur laquelle débouchent des canaux d'aspiration 25, 26, 27.

Lorsque le patin 22 est engagé dans la ventouse 1, sa surface plane 24 sert de butée pour l'objet sur lequel vient s'appliquer la ventouse, de sorte qu'on évite que la dépression créée par la ventouse n'entraîne la rupture de l'objet par flexion lorsque celui-ci est en matière fragile par exemple sous forme de plaques minces.

On voit d'autre part sur la figure 5B que la surface interne de l'embout 3 présente dans sa partie qui débouche dans la cavité interne 2 de la ventouse 1 une gorge annulaire 28 servant de moyen de fixation amovible pour un filtre 29 en forme de disque.

La mise en place et l'enlèvement du filtre 29 sont facilités du fait de l'élasticité de la matière qui compose la ventouse.

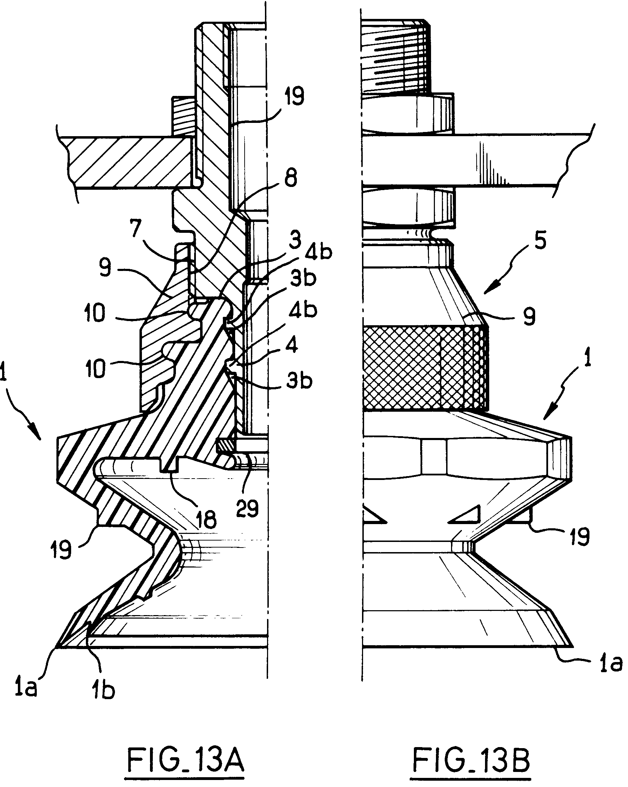

Les figures 13A et 13B représentent une version perfectionnée de la ventouse selon l'invention.

Par rapport à la réalisation des figures 1A et 1B, la version des figures 13A et 13B présente les différences suivantes :

La surface extérieure de l'extrémité tubulaire 4 au lieu d'être lisse présente des nervures annulaires 4b qui sont engagées dans des gorges 3b ménagées sur la surface intérieure de l'embout 3 de la ventouse.

D'autre part, la paroi de l'embout 3 est plus épaisse que celle de l'embout de la réalisation des figures 1A et 1B.

L'épaisseur de la paroi de cet embout 3 au lieu d'être sensiblement constante, augmente progressivement de l'extrémité de l'embout vers la ventouse proprement dite. De ce fait, les nervures 10 ménagées sur la surface extérieure de l'embout 3 présentent des longueurs différentes, la nervure la plus éloignée de l'extrémité de l'embout 3 étant plus longue que celle de l'autre nervure. Les gorges complémentaires ménagées dans la bague 9 ont été modifiées en conséquence.

Par ailleurs, le profil extérieur de la bague 9, au lieu d'être cylindrique, est rétréci dans sa partie qui est vissée sur la partie filetée du raccord, tandis que sa surface extérieure est évasée, puis cylindrique vers la ventouse.

Du fait notamment de la présence des nervures 4b sur l'extrémité tubulaire 4 et des modifications apportées à l'embout 3 et à la bague 9, la liaison entre la ventouse et le raccord supporte une plus grande résistance à l'arrachement.

Par ailleurs, la ventouse 1 comporte à son bord périphérique une double lèvre 1a, 1b qui améliore la qualité de la préhension.

Bien entendu, l'invention n'est pas limitée aux exemples de réalisation que l'on vient de décrire et on peut apporter à ceux-ci de nombreuses modifications sans sortir du cadre de l'invention.

Ainsi le raccord 5 et la bague 9 peuvent recevoir des ventouses ayant des dimensions différentes pourvu que celles-ci présentent un embout de dimensions et formes identiques.

Bien entendu, le raccord 5 à taraudage interne peut être remplacé par des raccords différents tels que les raccords 5A, 5B, 5C représentés sur les figures 10, 11 et 12 qui présentent des extrémités 4 et des parties filetées 7 identiques à celles du raccord 5, mais dont la partie restante est adaptée en fonction du mode de raccordement à réaliser avec l'appareillage disponible.

Par ailleurs, le nombre des nervures 10 et des gorges 11 pourrait être réduit à un seul.

## Revendications

1. Ventouse en matière souple pour appareil de préhension d'objets par dépression, comprenant une cavité (2) et à l'opposé de cette cavité un embout axial tubulaire (3) moulé d'une seule pièce avec le reste de la ventouse et destiné à être raccordé au dispositif d'aspiration de l'appareil, caractérisé en ce que dans cet embout tubulaire (3) est engagé de façon amovible l'extrémité tubulaire (4) d'un raccord (5) en matière rigide, cette extrémité tubulaire (4) étant limitée par un épaulement annulaire (6) venant en appui contre le bord (3a) de l'embout tubulaire (3), cet épaulement (6) étant adjacent à une partie annulaire filetée (7) vissée dans un taraudage (8) ménagé sur la surface interne d'une bague (9) entourant l'embout tubulaire (3) de la ventouse et en prise avec cet embout (3), de telle sorte que ledit embout (3) soit retenu axialement par la bague (9) et comprimé radialement entre celle-ci et l'extrémité tubulaire (7) dudit raccord rigide (5).

2. Ventouse conforme à la revendication 1, caractérisée en ce que l'extrémité tubulaire (4) du raccord (5) engagée dans l'embout (3) de la ventouse présente une surface tronconique (4a) dont la section décroît vers l'intérieur de la ventouse.

3. Ventouse conforme à l'une des revendications 1 ou 2, caractérisée en ce que l'embout (3) de la ventouse présente sur sa surface extérieure des nervures annulaires (10) engagées dans des gorges complémentaires (11) ménagées dans la surface intérieure de la bague (9).

4. Ventouse conforme à la revendication 3, caractérisée en ce que la section desdites nervures (10) et gorges (11) présente une partie rectiligne (10a) perpendiculaire à l'axe (X-X') de la ventouse et une partie arquée (10b), la partie rectiligne (10a) étant située du côté de la ventouse.

5. Ventouse conforme à l'une des revendications 1 à 4, caractérisée en ce que l'embout (3) de la ventouse présente à sa base un épaulement annulaire (12) sur lequel s'appuie la bague (9).

6. Ventouse conforme à l'une des revendications 1 à 5, caractérisée en ce que la surface filetée (7) du raccord (5) est limitée à l'opposé de sa partie tubulaire (4) engagée dans l'embout (3) par un épaulement annulaire (13) en regard du bord adjacent (9a) de la bague (9), cet épaulement (13) étant adjacent à une surface (16) conformée pour servir de prise à un outil de vissage du raccord.

7. Ventouse conforme à l'une des revendications 1 à 6, caractérisée en ce que le raccord (5) comporte sur sa surface interne une partie (15) conformée pour venir en prise avec un outil de vissage engagé axialement à l'intérieur du raccord.

8. Ventouse conforme à la revendication 7, caractérisée en ce que ladite partie conformée (15) présente des cannelures (17) situées sur les génératrices d'un cylindre.

9. Ventouse conforme à l'une des revendications 1 à 8, caractérisée en ce qu'elle comporte un patin rigide (22) emboîté de façon amovible dans la cavité interne (2) de la ventouse et présentant à l'opposé de l'embout (3) une surface d'appui plane (24) sur laquelle débouchent des canaux d'aspiration (25, 26, 27).

10. Ventouse conforme à l'une des revendications 1 à 9, caractérisée en ce que la surface interne de l'embout (3) présente dans sa partie qui débouche dans la cavité interne (2) de la ventouse une gorge annulaire (28) servant de moyen de fixation amovible pour un filtre (29) en forme de disque.

11. Ventouse conforme à l'une des revendications 1 à 10, caractérisée en ce que la surface extérieure de l'extrémité tubulaire (4) comporte des nervures annulaires (4b) engagées dans des gorges (3b) ménagées sur la surface intérieure de l'embout (3) de la ventouse.

12. Ventouse conforme à la revendication 11, caractérisée en ce que l'épaisseur de la paroi de l'embout (3) augmente progressivement depuis son extrémité vers la ventouse.

13. Ventouse conforme à l'une des revendications 1 à 12, caractérisée en ce que la ventouse comporte une double lèvre (1a, 1b).

FIG_1B

FIG_1A

FIG_1C

FIG_2

FIG_3

FIG_4

FIG_6

FIG_5A

FIG_5B

FIG_7

FIG_8

FIG_9

FIG_10

FIG_11

FIG_12

## FIG_13A

## FIG_13B

**Office européen des brevets**

# RAPPORT DE RECHERCHE EUROPEENNE

Numero de la demande

EP 92 40 1822

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | FR-A-2 043 100 (L. BLATT)<br>* page 1, ligne 27 - ligne 33; figure 2 *<br>--- | 1,3 | B66C1/02 |
| A | FR-A-521 267 (PILKINGTON BROTHERS)<br>* page 2, ligne 43 - ligne 52; figure 5 *<br>--- | 1,9,13 | |
| A | DE-A-3 518 640 (C. NEIDER)<br>* page 6, ligne 9 - ligne 28; figure 2 *<br>----- | 1,10 | |

**DOMAINES TECHNIQUES RECHERCHES (Int. Cl.5)**

B65G
B66C

Le présent rapport a été établi pour toutes les revendications

| Lieu de la recherche | Date d'achèvement de la recherche | Examinateur |
|---|---|---|
| BERLIN | 08 SEPTEMBRE 1992 | WESTERMAYER W. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)